# EUROPÄISCHE PATENTSCHRIFT

(11) **EP 4 522 786 B1**
(45) Veröffentlichungstag und Bekanntmachung des Hinweises auf die Patenterteilung: **01.04.2026**
(21) Anmeldenummer: 23809181.3
(22) Anmeldetag: 17.11.2023
(51) Int. Cl.: C25B 9/73, C25B 11/032, C25B 11/065, H01M 8/02, H01M 8/10

(54) **HALBZELLENVERBUND FÜR DEN EINSATZ IN ELEKTROCHEMISCHEN ZELLEN, VERBUNDANORDNUNG, VERBUND MIT EINEM SOLCHEN HALBZELLENVERBUND, UND STACK**
HALF-CELL COMPOSITE FOR USE IN ELECTROCHEMICAL CELLS, COMPOSITE ARRANGEMENT, COMPOSITE WITH SUCH HALF-CELL COMPOSITE, AND STACK
DEMI-CELLULE COMPOSITE POUR UTILISATION DANS LES CELLULES ÉLECTROCHIMIQUES, AGENCEMENT COMPOSITE, COMPOSITE AVEC UNE TELLE DEMI-CELLULE COMPOSITE, ET EMPILEMENT

(30) Priorität: 18.11.2022 DE 102022130570
(43) Veröffentlichungstag der Anmeldung: 19.03.2025
(73) Patentinhaber: Fraunhofer-Gesellschaft zur Förderung der angewandten Forschung e.V., 80686 München (DE)
(72) Erfinder: BROMBERGER, Kolja, 79110 Freiburg (DE); METZ, Sebastian, 79110 Freiburg (DE); SMOLINKA, Tom, 79110 Freiburg (DE)
(74) Vertreter: Maiwald GmbH
(86) Internationale Anmeldenummer: PCT/EP2023/082191
(87) Internationale Veröffentlichungsnummer: WO 2024/105229

(56) Entgegenhaltungen:
- WO-A1-2021/165994
- CN-U- 216 850 005
- DE-A1- 102017 108 413
- DE-A1- 102020 216 104
- US-A1- 2014 238 845

## Beschreibung

### Technisches Gebiet

Die vorliegende Erfindung befasst sich mit Zellaufbauten zur Ausbildung von Stacks für elektrochemische Zellen, sowie entsprechende Zellen und Stacks insbesondere für die Elektrolyse, siehe Ansprüche 1, 11, 14 und 17.

### Hintergrund der Erfindung

Elektrochemische Membran-Zellen wie sie zum Beispiel für Elektrolyseure, Flussbatterien und Brennstoffzellen benötigt werden, bestehen im Prinzip aus einem anodischen Teil und einem kathodischen Teil, wobei die beiden Teile durch eine Membran, meist basierend auf einem PFSA-lonomer, getrennt sind. Üblicherweise ist die Anode, die trennende Membran und die Kathode zu einer Membran-Elektrodeneinheit (abgekürzt MEA) verpresst. Standard bei Proton Exchange Membrane-Elektrolyseuren (abgekürzt: PEM-Elektrolyseuren) ist ferner die bipolare Verschaltung, wobei alle Zellen elektrisch in Reihe geschaltet sind und vom gleichen Strom durchflossen werden. Zur Abführung von Wasserstoff und von Sauerstoff sind Gasräume zwischen den Bipolarplatten und den benachbarten Elektroden notwendig. Ferner müssen die Bipolarplatten und die benachbarten Elektroden elektrisch leitend verbunden sein. Zu diesem Zweck werden Metallsinterkörper, Lochbleche und Streckmetalle eingesetzt. Der Wasserstoff und der Sauerstoff werden in getrennten Gassammelkanälen abgeführt. Historisch wurde ein Zellrahmen als Umschließung für eine Elektrolyse-Halbzelle eingesetzt, um die Bauteile sowie die Dichtungen aufzunehmen und um die Bauteile fest mit den Dichtungen zu verspannen.

Die Anwendung von Elektrolyseuren, Flussbatterien und Brennstoffzellen zur großskaligen Energiewandlung verlangt nach möglichst großen Flächen der trennenden Membran und, noch wichtiger, einer Bauweise, welche höchste Ausfallsicherheit bei jahrzehntelangem Betrieb ermöglicht. Dabei ist zu beachten, dass die notwendige Laststeuerung beim Einsatz von Solar- und Windkraftanlagen drastisch verschärfte Anforderungen an elektrochemische Zellen stellt: es versteht sich von selbst, dass ein Elektrolyseur, welcher an einem Siedewasserreaktor dauerhaft betreiben wird, wesentlich weniger belastet wird, als ein Elektrolyseur, welcher an einem Windpark mit stark fluktuierenden Strommengen betrieben wird. Eine Abfolge von beispielsweise drei Tage Volllast, gefolgt von einem Tag Stillstand, gefolgt von einem Tag 25% Last resultiert in erheblich gesteigerten Anforderungen. Die PEM-Elektrolyse verspricht in einem dezentralen und auf erneuerbaren Energien basierenden Stromsystem das größte Potential im Hinblick auf einen on-demand Betrieb mit kürzest-möglichen Startzeiten. Dabei stellen die kurzfristigen Lastzyklen im Sekunden- und Minutenbereich sowie Start-Stopp-Zyklen sehr hohe Anforderungen an das Zell- und Stack-Konzept. Ferner verlangt der großtechnische Einsatz in der Energieversorgung, beispielsweise für die saisonale Langzeitspeicherung von Wasserstoff in Salzkavernen, nach drastisch reduzierten Kosten, welche nur mit Designs erreicht werden können, die skalierbar und mit automatisierten Verfahren herstellbar sind.

Bisher bekannte Zellstapel sind in ihren Designs oft komplex und aufwendig in der Montage, wobei diese Montage immer noch meist händisch erfolgt. Das größte Problem bei der Erreichung der generellen Ziele stellt das Dichtungskonzept dar. Im Falle der PEM-Elektrolyse wird üblicherweise der anodische Teil (Seite der Sauerstoffproduktion) bei etwa Normaldruck betrieben, während der kathodische Teil (Seite der Wasserstoffproduktion) bei etwa 20 bis 40 bar betrieben wird. Es treten also erhebliche Lasten auf, welche dauerhaft und unter wechselnden Bedingungen bewältigt werden müssen. Die DE102017108413A1 beschreibt einen Aufbau, bei welchem die Zellenstapelelemente zumindest im Wesentlichen lose, aufeinandergelegt und nach einem Aufeinanderlegen verpresst werden.

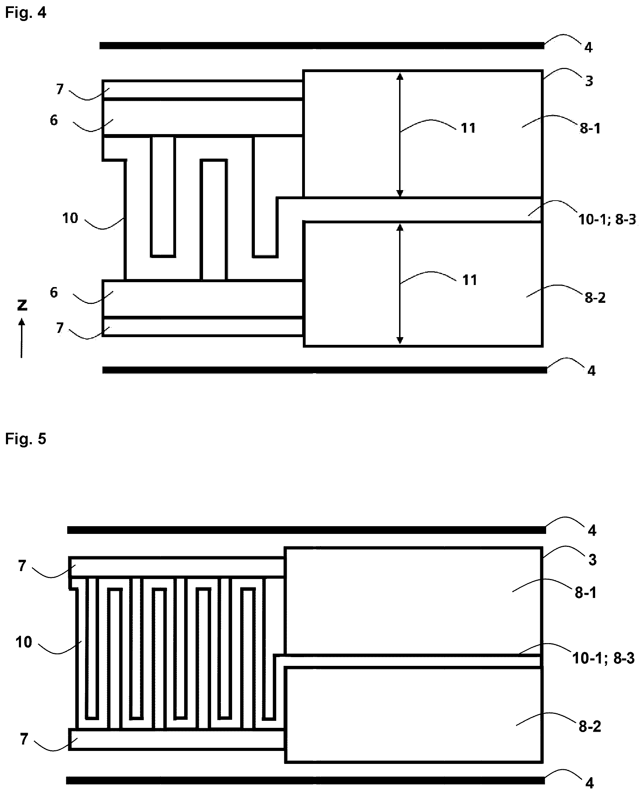

Figur 4 offenbart ferner eine elektrochemische Zelle mit folgendem siebenteiligem Aufbau: [1] bipolarer Platte mit gummiertem Randbereich / [2] Streckmetall-Stapelelement / [3] Lochblech-Stapelelement / [4] Gasdiffusionsschichtelement (Kohlenstofffilz; Titanfilz) / [5] Zellstapelelement mit Polymerelektrolytmembran / [6] Gasdiffusionsschichtelement (Kohlenstofffilz; Titanfilz) / [7] Siebblech aus Titan und/oder Edelstahl. Bei diesem Aufbau wird ein erster Metall-Gummi-Metalldichtkontakt zwischen den Elementen bipolarer Platte mit gummiertem Randbereich [1] und dem Lochblech-Stapelelement [3] verwirklicht. In einem Stack ergibt sich ferner ein Metall-Gummi-Metalldichtkontakt zwischen der bipolaren Platte mit gummiertem Randbereich [1] und dem Siebblech [7] aus der direkt angrenzenden Zelle.

Eine zweite Dichtung im Kraftschluss ist zwischen den Elementen Lochblech-Stapelelement [3] / Gasdiffusionsschichtelement (Kohlenstofffilz; Titanfilz) / Zellstapelelement mit Polymerelektrolytmembran [5] umgesetzt. Ferner ist vorgesehen, dass das zweite und das dritte Zellstapelelement, also das Streckmetall-Stapelelement [2] und das Lochblech-Stapelelement [3] lose aufeinandergelegt sind, d.h. getrennt voneinander ausgebildet sind. Die Zellstapelelemente [1], [3], [5] und [7] weisen bedingt durch ihre Dichtungsfunktionalität ferner ausgeprägte Randbereiche auf. DE102017108413A1 lässt die Möglichkeit der Mehrfachfunktion offen, stellt aber auf die Lösbarkeit der Zellstapelelemente in Abwesenheit der Einrichtung zur Kraftbeaufschlagung ab. Elektrochemische Zellen mit entsprechendem oder ähnlich komplexem Aufbau haben den Nachteil, dass die auftretenden Lastwechsel durch Druckunterschiede und Temperaturschwankungen im jahrzehntelangen Betrieb Nachteile wie eine Zunahme von Kontaktwiderständen und eine damit einhergehenden Wirkungsgradreduktion oder eine Abnahme der Dichtwirkung aufweisen können, und dass eine Kostenreduktion durch vollautomatische Herstellung schwierig ist.

CN 216 850 005 U beschreibt ein Verbundsystem mit einem Gasdiffusionsschichtelement und einer bipolaren Platte ohne feste Verbindung. DE 10 2020 216104 A1 beschreibt einen Brennstoffzellenstapel umfassend eine Bipolarplatte, eine Gasdiffusionslage, eine Membran sowie einer elektrisch leitfähigen Beschichtung. US 2014/0238845A1 beschreibt eine elektrochemische Zelle mit einem Paar von bipolaren Platten und einer Membran-Elektroden Anordnung zwischen den bipolaren Platten. WO2021/165994A1 beschreibt einen Brennstoffzellenstack mit einer bipolaren Platte zwischen einem Paaar von Brennstoffzellen Anordnungen.

Die DE102014204372A1 beschreibt ein Verfahren zur Herstellung von katalytisch aktiven Pulvern aus metallischem Silber oder aus Mischungen aus von metallischem Silber mit Silberoxid zur Herstellung von Gasdiffusionselektroden. Dabei wird die Verwendung eines elektrisch leitenden Trägers in Form eines Netzes, Vlies, Schaum, Gewebe, Geflecht oder Streckmetall berichtet, wobei zwei oder mehrere Netze, Vliese, Schäume, Gewebe, Geflechte oder Streckmetalle durch Sintern oder Schweißen miteinander verbunden sein können. Ein Dichtungskonzept wird nicht offenbart. DE102014204372A1 betrifft ferner keinen zumindest teilweise materialschlüssigen Verbund zur Ausbildung eines Halbzellenverbundes.

Ein anderes Design wird von der DE102013225159 beschrieben. Figuren 14 und 15 zeigen hierbei fertiggestellte Elektroden-Bipolarfolien-Einheiten während in Figur 16 exemplarisch ein Zellstapel mit zwei Einzelzellen gezeigt ist. Der Stapelaufbau ist durchströmbare Elektrode / GE-X Grundelement mit porösem durchströmbaren Bereich / Membraneinheit / durchströmbare Elektrode / bipolare Folie oder Platte. Dieser Stapelaufbau wird von einer Spannanordnung fixiert und ist rahmenlos. Die Grundelemente "GE-X" sind flächige Gebilde mit Netz- oder poröser Struktur. Es liegen immer zwei Grundelemente "GE-X" übereinander. Das Dichtkonzept basiert hier auf Füllmassen "FM-1" im Randbereich der Grundelemente "GE-X". Die Füllmassen sind an den Randbereichen aller Elemente "GE-X" vorhanden. Durch Bereiche der Grundelemente, die nicht mit Füllmasse verfüllt sind, werden Kanäle für die Gasführung bereitgestellt. Es ist ferner beschrieben, dass sich die Grundelemente "GE-X" durch die Einbringung von Füllmassen spezifisch funktionalisieren lassen, indem Bereiche mit einer Füllmasse versehen werden, um die Funktion einer Dichtung, Membran, Elektrode, bipolaren Platte oder Folie auszubilden. Das Dichtkonzept kennzeichnet sich also dadurch aus, dass Dichtflächen zwischen den Füllmassen "FM-1" zwischen zwei Grundelementen "GE-X" ausgebildet werden. DE102013225159 lehrt außerdem, dass ein Grundelement eingesetzt werden kann, um eine Membran, Elektrode oder bipolare Platte bzw. Folie nach dem Stand der Technik aufzunehmen bzw. Dichtungen, neuartige integrierte Membranen, Elektroden, bipolare Platten oder Folien sowie Verbundeinheiten hieraus auszubilden, d.h. die Verwendung separater Bauteile ( Membran, Elektrode und bipolare Platte oder Membran, Elektrode und Folie) innerhalb eines Grundelementes.

Elektrochemische Zellen mit entsprechendem Aufbau haben den Nachteil, dass eine ausreichende Verpressung der aktiven Flächen Schwierigkeiten bereitet. Weiter ist eine präzise Abstimmung der Anpresskräfte im Bereich der Dichtflächen und der aktiven Fläche schwierig. Eine genaue und gleichzeitige Einstellung der Dichtwirkung und des Innenwiderstandes ist damit nicht möglich.

Es war daher Aufgabe der vorliegenden Erfindung einen Verbund bereitzustellen, der eine gleichzeitige und definierte Anpresskraft im Bereich der Dichtung und im aktiven Bereich erlaubt, wobei ferner die Komplexität des Verbunds verringert ist. Die Erfindung zielt ferner auf außerordentliche Langzeitstabilität und industrielle Skalierbarkeit ab.

### Allgemeine Beschreibung

Die vorliegende Erfindung beruht auf der Erkenntnis, dass eine Kraftverteilplatte mit infiltriertem Dichtelement in einer außerordentlich vorteilhaften Gasdruckstabilität resultiert und zusammen mit einem zumindest teilweise materialschlüssigen Verbund von Streckmetall oder Lochblech ohne Randbereich, Kraftverteilerplatte mit infiltriertem Dichtelement und Gasdiffusionsschichtelement eine außerordentliche Langzeitstabilität sowie Skalierbarkeit erreicht wird.

Die vorliegende Erfindung stellt insofern bereit:
Halbzellenverbund (HZV) umfassend
   a) Streckmetall oder Lochblech ohne Randbereich,
   b) Kraftverteilerplatte mit infiltriertem Dichtelement und
   c) Gasdiffusionsschichtelement,
wobei a), b) und c) als materialschlüssiger Verbund ausgeführt sind (siehe Anspruch 1);
Die vorliegende Erfindung stellt ferner bereit:
   Einen Verbund, insbesondere geeignet zur Elektrolyse umfassend, bevorzugt bestehend aus:
   Eine(r) bipolare Platte (BPP);
   Einen (einem) Halbzellenverbund (HZV) umfassend, bevorzugt bestehend aus
      a) Streckmetall oder Lochblech ohne Randbereich,
      b) Kraftverteilerplatte mit infiltriertem Dichtelement und
      c) Gasdiffusionsschichtelement, wobei a), b) und c) als materialschlüssiger Verbund ausgeführt sind;
   eine (einer) Membran-Elektrodeneinheit (MEA), wobei Dichtflächen nur
      i) zwischen der bipolaren Platte (BPP) und dem Halbzellenverbund; sowie
      ii) zwischen dem Halbzellenverbund und der Membran-Elektrodeneinheit (MEA) vorhanden sind (siehe Anspruch 11).

Darüber hinaus wird eine Verbundanordnung bereitgestellt, die umfasst, bevorzugt bestehend aus:
eine (einer) erste (ersten) Membran-Elektrodeneinheit (MEA);
einen (einem) Halbzellenverbund umfassend, bevorzugt bestehend aus
   a) ein erstes (einem ersten) Gasdiffusionsschichtelement;
   b) eine erste (einer ersten) Kraftverteilerplatte ohne infiltriertem Dichtelement;
   c) eine (einer) bipolare Platte als Trägerstruktur mit Kanälen mit infiltriertem Dichtelement im perforiertem Randbereich
   d) eine zweite (einer zweiten) Kraftverteilerplatte ohne infiltriertem Dichtelement
   e) ein zweites (einem zweiten) Gasdiffusionsschichtelement

wobei a) bis e) als zumindest teilweise materialschlüssiger, bevorzugt materialschlüssiger Verbund ausgeführt sind;
eine zweite (einer zweiten) Membran-Elektrodeneinheit (MEA), siehe Anspruch 14.

Ein Stack entsprechend der Erfindung ist auch definiert, siehe Anspruch 17.

Erfindungsgemäß gibt es Dichtflächen nur zwischen dem Halbzellenverbund und einer Membran-Elektrodeneinheit (MEA) sowie dem Halbzellenverbund und einer bipolaren Platte. Die Membran-Elektrodeneinheit (MEA) sowie die bipolaren Platte können also direkt ohne weitere Dichtung mit dem Halbzellenverbund kontaktiert werden. Erfindungsgemäß gibt es im Falle des Einzellers entsprechend nur Dichtflächen nur zwischen dem Halbzellenverbund und der Membran-Elektrodeneinheit (MEA) sowie dem Halbzellenverbund und der anodischen oder kathodischen Stromverteilplatte.

### Definitionen:

Ein Halbzellenverbund (HZV) ist ein Verbundbauteil bestehend aus Einzelkomponenten zum Einsatz als Halbzelle in einer elektrochemischen Zelle. Ein Halbzellenverbund (HZV) ist zur Anordnung zwischen einer Bipolaren Platte/Folie und einer Membran-Elektrodeneinheit (MEA) vorgesehen, bzw. zur Anordnung zwischen einer anodischen oder kathodischen Stromverteilplatte und einer Membran-Elektrodeneinheit (MEA).

Ein Streckmetall ist ein Werkstoff mit Öffnungen in der Oberfläche. Diese werden während der Herstellung durch versetzte Schnitte ohne Materialverlust unter gleichzeitig streckender Verformung eines Bleches eingebracht. Ein Streckmetall ist gleichbedeutend mit einem Streckgitter.

"Lochblech ohne Randbereich" bedeutet, dass die Struktur des Lochblechs im Randbereich identisch mit der Struktur des Lochblechs in der Mitte ist. Es gibt also keinen Randbereich ohne Löcher, welcher als Dichtpartner dienen könnte.

Kraftverteilerplatte ist jede Platte, welche die normal zur Ebene wirkende mechanischen punktuelle Lasten aufnimmt und vergleichmäßigt bezogen auf die Normale auf der anderen Seite weitergibt. In diesem Sinne ist beispielsweise jede dünne Stahl- oder Titanplatte eine Kraftverteilplatte. Ebenso können Streckmetalle mit Maschenlängen und Maschenbreiten kleiner gleich 2,5 mm (DIN791 (1967-03-00)) oder Lochbleche mit Lochweiten kleiner gleich 1,5 mm (DIN 24041 (2022-06-00)) als Kraftverteilerplatte betrachtet werden: punktuelle Lasten auf der Oberseite werden vergleichmäßigt an die Unterseite weitergegeben. Im Falle der Anwendung eines Streckmetalls als Kraftverteilplatte ist es vorteilhaft, wenn die Maschenlängen und Maschenbreiten jeweils kleiner gleich 2,0 mm (DIN791 (1967-03-00)) sind. Im Falle der Anwendung eines Lochblechs als Kraftverteilplatte ist es vorteilhaft, wenn die Lochweiten kleiner gleich 1,0 mm (DIN 24041 (2022-06-00)) sind.

Kraftverteilerplatte mit infiltriertem Dichtelement ist eine Kraftverteilerplatte, wobei in Ausnehmungen ein Dichtelement infiltriert ist. Gewöhnlicherweise wird die Infiltration in die Kraftverteilplatte nur in einem Randbereich vorgenommen werden. Dies bedeutet, dass im Randbereich im Wesentlich vollständig infiltriert wird, während im restlichen Bereich keine Infiltration vorgenommen wird.

In den Anordnungen der vorliegenden Erfindung entstehen durch das Steckmetall an den Kontaktflächen zur Kraftverteilerplatte hohe mechanische Lastspitzen, die in der Ebene verteilt werden und in einer gleichförmigen Weise an das Gasdiffusionsschichtelement abgegeben werden. Je nach ausgewähltem Streckmetall ergeben sich geometrische Auflageflächen zur Kraftverteilerplatte. Je nach flächenintegraler mechanischer Verpressung ergeben sich dann Lastspitzen an diesen Auflageflächen im Bereich 10 bis 200 MPa. Eine wirksame Homogenisierung der Lastspitzen in der Ebene der Kraftverteilerplatte ist erreicht, wenn die lokale Flächenlast am Interface Kraftverteilerplatte / Gasdiffusionsschichtelement im Bereich von 0,5 bis 10 MPa liegt.

Dies kann typischerweise erreicht werden mit feinen Streckmetallen oder Lochblechen aus Titan oder Edelstahl mit einer Dicke von 0,1 mm bis 0,5 mm.

"Zumindest teilweise materialschlüssiger Verbund" bzw. "zumindest teilweise materialschlüssig" bedeutet, dass mindestens zwei Bauteile punktuell oder flächig materialschlüssig verbunden sind. Eine punktuelle materialschlüssige Verbindung kann z.B. durch Elektroschweißen hergestellt werden. Eine flächige materialschlüssige Verbindung kann z.B. durch Diffusionsschweißen hergestellt werden.

"Materialschlüssiger Verbund" ohne den Zusatz "zumindest teilweise" bedeutet, dass alle Bauteile materialschlüssig verbunden sind. Die Möglichkeiten der punktuellen materialschlüssigen Verbindung bzw. der flächigen materialschlüssigen Verbindung wie oben erläutert bestehen in gleicher Weise. Gewöhnlicherweise wird Materialschluss durch Sintern erreicht. Werden das Streckmetall oder das Lochblech ohne Randbereich mit der Kraftverteilerplatte mit infiltriertem Dichtelement und mit dem Gasdiffusionsschichtelement materialschlüssig durch Sintern verbunden, wird eine homogene und enorm langzeitstabile Anordnung erreicht.

Eine "Porous Transport Layer (PTL)" unterstützt insbesondere die Wasserzufuhr zur Anode und den Abtransport von Sauerstoff von der Anode bzw. Wasserstoff von der Kathode. "Porous Transport Layer (PTL)" sind prinzipiell bekannt und im Rahmen der vorliegenden Erfindung auch nicht beschränkt. Es wird auf Kolja Bromberger, Jagdishkumar Ghinaiya, Thomas Lickert, Arne Fallisch, Tom Smolinka, Hydraulic ex situ through-plane characterization of porous transport layers in PEM water electrolysis cells, International Journal of Hydrogen Energy, Volume 43, Issue 5, 2018, Pages 2556-2569, ISSN 0360-3199, https://doi.org/10.1016/j.ijhydene.2017.12.042 verwiesen.

Eine "Microporous Layer (MPL)" hat gleiche Funktionalitäten wie eine "Porous Transport Layer (PTL)" bzw. ein Gasdiffusionsschichtelement (abgekürzt: GDL) aber minimierte Porengrößen für eine verbesserte elektrische Kontaktierung zur Elektrode hin. Im Folgenden wird der Begriff Gasdiffusionsschichtelement als Oberbegriff für die Begriffe "Microporous Layer (MPL)" sowie "Porous Transport Layer (PTL)" verwendet.

Gasdiffusionsschichtelement ist ein Standardbauteil, welches die Zuführung von Wasser zur Katalysatorschicht und Abtransport von Reaktionsgas von der Katalysatorschichtermöglicht und zur gesamten mechanischen Stabilität beiträgt.

Die vorliegende Erfindung ist bevorzugt gekennzeichnet durch die Abwesenheit einer Randdichtung, bei der es zum Kraftschluss von Elastomer- und/oder Plastomermaterialien kommt, ohne dass eine metallische Trägerstruktur zwischengeschaltet ist. Mit anderen Worten, ein Dichtelement bestehend aus einem Elastomer und/oder Plastomer drückt nie direkt auf ein weiteres Dichtelement bestehend aus einem Elastomer und/oder Plastomer; es ist immer eine Kraftverteilplatte, welche auch als Trägerstruktur bezeichnet wird, als Zwischenebene positioniert. Die Kraftverteilplatte ist mit einem infiltriertem Dichtelement versehen.

Im Folgenden soll der Aufbau und auch die Herstellung des Dichtelements oder der Dichtelemente näher beschrieben werden.

Bevorzugt werden Elastomere und/oder Plastomere in die Kraftverteilplatte infiltriert, wobei die Infiltration auf die Randbereiche beschränkt wird. Es ist nun möglich das Steckmetall oder Lochblech ohne Randbereich und/oder das Gasdiffusionsschichtelement ebenfalls im Randbereich zu infiltrieren.

Im einfachsten Fall bestehen vorteilhafterweise alle Infiltrationen aus dem gleichen Material, bevorzugt aus dem gleichen Elastomer und/oder Plastomer.

Es versteht sich von selbst, dass das Material des infiltrierten Dichtelementes und die darüber- bzw. darunterliegenden Dichtelemente im Eingriff stehen, bzw. vorteilhafterweise ein einziges durchgehendes Material bilden. Bevorzugt ist es so, dass keine der Dichtflächen aus einem Paar Elastomer und/oder Plastomer // Elastomer und/oder Plastomer besteht.

Zusammengefasst ist die vorliegende Erfindung bevorzugt durch die Abwesenheit einer Randdichtung durch Kraftschluss von Elastomer- und/oder Plastomerdichtungen gekennzeichnet.

In gleicher Weise wie für die Kraftverteilplatte beschrieben, ist es auch möglich, eine bipolare Platte als Trägerstruktur mit Kanälen vorzusehen, und in den perforierten Randbereich der bipolaren Platte eine Infiltration vorzunehmen, um ein Dichtelement bereitzustellen. Die Aufbauhöhen werden bevorzugt so gewählt, dass eine Dichtung gegenüber einer ersten bzw. zweiten Membran-Elektrodeneinheit entsteht.

### Vorteile und Funktionalität

Die Kraftverteilerplatte vermindert ein plastisches Eindringen des Gasdiffusionsschichtelements in den offenen Raum des Streckmetalls. Ein solches Eindringen hätte eine Querschnittsverkleinerung und damit einer Steigerung der hydraulischen Druckverluste entlang der Fließrichtung im groben Streckmetall zur Folge.

Weiter wird eine inhomogene und teilweise plastische Verpressung des Gasdiffusionsschichtelements vermieden, was mit einer ungleichmäßigen mechanischen Druckverteilung am Interface Gasdiffusionsschichtelement (GDL) und Membran-Elektrodeneinheit (MEA) einhergehen kann und außerdem die Porengrößenstruktur durch eine solche plastische Verformung mit der Folge einer veränderten kapillaren Wasseraufnahmefähigkeit bzw. Gasaustrageigenschaften verändert.

Der erfindungsgemäße Halbzellenverbund vereint folgende Funktionen in nur einem Bauteil:
(1) Dichtung
   a. Dichtung einer Halbzelle gegenüber der Umgebung
   b. Dichtung der beiden Halbzellen gegeneinander
(2) Fluidverteilung
   a. Fluidverteilung innerhalb eines Zellstapels auf die Halbzelle
   b. Fluidverteilung innerhalb der Halbzelle in der Ebene
   c. Eduktverteilung innerhalb der Halbzelle senkrecht zur Ebene hin zur Reaktionszone
   d. Produktabführung von der Reaktionszone innerhalb der Halbzelle senkrecht zur Ebene
   e. Produktabführung innerhalb der Halbzelle in der Ebene hin zum Halbzellenauslass
(3) Elektrische Kontaktierung
   a. elektrische Kontaktierung der stromführenden Teile innerhalb der aktiven Fläche von der bipolaren Platte zur Membran-Elektrodeneinheit (MEA) bzw. von der Membran-Elektrodeneinheit (MEA) zur bipolaren Platte
   b. elektrische Isolation der Halbzellen gegeneinander außerhalb der aktiven Fläche
(4) mechanische Anpresskräfte
   a. Verteilung und Dosierung der mechanischen Anpresskräfte auf die Dichtkontur und den funktionalen Bauteilen, insbesondere Gasdiffusionsschichtelement(en) in z-Richtung in der x-y-Ebene, d.h. orthogonal zur Membran-Elektrodeneinheit (MEA)
   b. Verteilung und Dosierung der mechanischen Anpresskräfte auf der Dichtkontur und den funktionalen Bauteilen in z-Richtung in der x-y-Ebene, d.h. orthogonal zur bipolaren Platte
(5) Positionierung der Bauteile
   a. Positionierung der funktionalen Bauteile (Einleger) in x- und y-Richtung auf dem Trägermaterial durch entsprechende Passungen im Dichtelement
   b. Positionierung der Halbzellenverbünde, Membran-Elektrodeneinheit (MEAs) und bipolaren Platten untereinander durch entsprechende Passungen im Dichtelement
(6) Materialschluss
   a. materialschlüssige Verbindung eines mehrlagigen Aufbaus durch z.B. 2-Punkt-Elektroschweißen oder ggf. durch Sintern und Vereinfachung der Assemblierung durch Bauteilreduzierung
   b. Materialschlüssige Verbindung eines mehrlagigen Aufbaus durch z.B. Diffusionsschweißen oder ggf. durch Sintern und Reduktion der elektrischen Kontaktwiderstände zwischen den Einzellagen
(7) Thermische Isolation

Thermische Isolation der anodischen bzw. kathodischen Halbzelle gegenüber der Atmosphäre durch die geringe Wärmeleitfähigkeit des Dichtelementes.

Durch den erfindungsgemäßen Halbzellenverbund ergibt sich ferner der Vorteil, dass kein zusätzliches Rahmenteil notwendig ist. Gehäuse sind nicht als Rahmenteil zu betrachten. Unter einem Rahmenteil wird ein Bauteil verstanden, das zur Statik des Gesamtaufbaus beiträgt.

Der materialschlüssige Verbund wird beispielswiese durch Elektro-, Laser-, Diffusionsschweißen oder Sintern hergestellt. Materialschlüssig bedeutet, dass die verbundenen Elemente durch atomare oder molekulare Kräfte zusammengehalten werden. Der materialschlüssige Verbund ist verständlicherweise nicht lösbar, d.h. die Elemente lassen sich nur unter Zerstörung der Verbindungsmittel bzw. unter Zerstörung der Elemente an sich, trennen. Es versteht sich von selbst, dass ein quasi durchgehender Materialschluss, wie er zum Beispiel durch Sintern erzeugt werden kann, nicht unbedingt notwendig ist. Definitionsgemäß liegt Materialschluss dann vor, wenn die einzelnen Elemente nur noch unter zerstörendender Einwirkung trennbar sind.

Die vorliegende Erfindung hat folgenden Vorteile:
1) Verringerung der Bauteile in einer elektrochemischen Zelle;
2) Vereinfachung der Assemblierung;
3) Verwendung automatisierter Herstellverfahren zur Herstellung eines Halbzellenverbundes darstellbar;
4) vereinfachte automatisierte Stapelverfahren von Einzelteilen zu einem Zellstapel umsetzbar;
5) einfache Qualitätsprüfung eines Halbzellenverbundes vor Assemblierung;
6) einfache Skalierbarkeit des Halbzellenverbundes in der aktiven Fläche;
7) Variabilität in der Verwendung funktionaler Bauteile;
8) Vermeidung von Kontaktproblematik innerhalb eines Stacks
9) ausgeprägte Robustheit gegenüber Druck- und Temperaturgradienten.

Bevorzugt werden ein oder mehrere Elastomere und/oder Plastomere in das Streckmetall oder Lochblech ohne Randbereich eingebracht. Vorteilhafterweise wird das Streckmetall oder Lochblech ohne Randbereich maskiert um eine vollständige Verfüllung mit dem oder den Elastomeren und/oder Plastomere im Bereich der Dichtung sicherzustellen und eine Verfüllung im Bereich von Fluidwegen und im aktiven Bereich sicher zu vermeiden. Das Elastomer oder die Elastomere (bzw. das Plastomer/die Plastomere ggf. in Kombination) können durch bekannte Verfahren wie Spritzguss-, Heißpress-, Kaschier- bzw. Laminier- oder Siebdrucktechnik eingebracht werden. Es ist außerdem möglich ein oder mehrere Elastomere und/oder Plastomere in das Steckmetall oder Lochblech ohne Randbereich und/oder das Gasdiffusionsschichtelement einzubringen. Es versteht sich von selbst, dass eine solche Infiltration vorteilhafterweise, nur im Randbereich vorgenommen wird, um eine Verfüllung im Bereich von Fluidwegen und im aktiven Bereich sicher zu vermeiden. Wenn eine Infiltration in alle drei Lagen, d.h. das Streckmetall oder Lochblech ohne Randbereich als erste Lage, die Kraftverteilerplatte als zweite Lage und das Gasdiffusionsschichtelement als dritte Lage erfolgt, ergibt sich eine durchgehende Randdichtung, welche außerordentlich gut im Streckmetall bzw. Lochblech ohne Randbereich, in der Kraftverteilerplatte und im Gasdiffusionsschichtelement fixiert ist. Mit anderen Worten, die Fixierung in den metallischen Bauteilen ist maximiert.

Die vorliegende Erfindung ist vorteilhafterweise durch die Abwesenheit eine Siebblechs gekennzeichnet. Siebleche sind Bleche, welche zum Sieben verwendet werden können.

In einer zweiten, weniger bevorzugten Ausführungsform wird das Streckmetall durch ein Lochblech ohne Randbereich ersetzt. Bei dieser Ausführungsform wird ein Lochblech eingesetzt, dass bis in den Randbereich Ausnehmungen aufweist. Mit anderen Worten, es ist kein undurchlochter Randbereich vorhanden. Die Randbereiche weisen also genauso wie die Mitte Ausnehmungen auf. Die Abwesenheit eines undurchlochten Bereichs ermöglicht die Infiltration wie oben beschrieben.

Der erfindungsgemäße Halbzellenverbund ist so ausgeführt , dass die Elemente Streckmetall oder Lochblech ohne Randbereich, Kraftverteilerplatte mit infiltriertem Dichtelement und Gasdiffusionsschichtelement als materialschlüssiger Verbund ausgeführt sind. Üblicherweise wird der Materialschluss durch ein Schweißverfahren (z.B. Punktschweißen oder Laserschweißen oder Diffusionsschweißen) oder Sintern realisiert werden.

Das Gasdiffusionsschichtelement ist bevorzugt eine Porous Transport Layer (PTL) und/oder eine Microporous Layer (MPL).

In einer bevorzugten Ausführungsform des erfindungsgemäßen Halbzellenverbund (HZV) wird durch die Abfolge der Bauteile
a) Streckmetall oder Lochblech ohne Randbereich,
b) Kraftverteilerplatte (6-1) mit infiltriertem Dichtelement (8-3) und
c) Gasdiffusionsschichtelement (7), die z-Achse definiert;
   und
das infiltrierte Dichtelement der Kraftverteilerplatte weist einen mindestens einseitigen Überstand im Bereich der Infiltration entlang der z-Achse
i) auf der Seite Streckmetalls (5) ;
   oder
ii) auf der Seite des Gasdiffusionsschichtelementes (7) auf.

Bevorzugt ist ein zweiseitiger Überstand im Bereich der Infiltration entlang der z-Achse vorhanden. In diesem Fall liegt dieser Überstand im Bereich der Infiltration entlang der z-Achse
i) auf der Seite Streckmetalls (5);
   und
ii) auf der Seite des Gasdiffusionsschichtelementes (7) vor.

Als Überstand wird die Höhe in Richtung der z-Achse ausgehend vom oberen bzw. unteren Ende der Kraftverteilerplatte betrachtet. Der Überstand bzw. die Überstände sind größer als die Stärke des Streckmetalls oder Lochbleche ohne Randbereich und auch größer als die Stärke des Gasdiffusionsschichtelement. Als Stärke wird hier ebenfalls die Ausdehnung in Bezug auf die z-Achse angesehen.

Durch den einseitigen, bevorzugt zweiseitigen Überstand in Richtung der z-Achse wird mindestens ein Dichtelement ausgebildet und bevorzugt werden zwei Dichtelemente ausgebildet.

Im Fall eines einseitigen Überstandes in Richtung der z-Achse durchdringt das ausgebildete Dichtelement entweder die erste Schicht gebildet aus dem Streckmetall oder aus dem Lochblech ohne Randbereich, oder die dritte Schicht gebildet aus dem Gasdiffusionsschichtelement.

Im Fall eines zweiseitigen Überstandes in Richtung der z-Achse durchdringt das ausgebildete Dichtelement sowohl die erste Schicht gebildet aus Streckmetall oder aus Lochblech ohne Randbereich, und die dritte Schicht gebildet aus dem Gasdiffusionsschichtelement.

Bevorzugt wird der Überstand in Richtung der z-Achse so gewählt, dass ein Anpressdruck zwischen 0,5 und 8,0 MPa zwischen
einem weiteren metallischen oder metallhaltigen Bauelemente im Kontakt mit
   i) dem Streckmetall (5);
      oder mit
   ii) dem Gasdiffusionsschichtelement (7),
bezogen auf die Kontaktflächen des Streckmetalls (5) oder des Gasdiffusionsschichtelement (7) mit dem weiteren oder den weiteren metallischen oder metallhaltigen Bauelementen außerhalb des Dichtelements ermöglicht wird. Der hier genannte Anpressdruck von 0,5 bis 8,0 MPa bezieht sich also auf den Druck zwischen den metallischen oder metallhaltigen Bauelemente. Die absolute Höhe des Überstandes in z-Achsenrichtung ist vom konkret gewählten Elastomer oder Plastomer abhängig.

Es ist ferner vorteilhaft, wenn der mindestens einseitigen Überstand in Richtung der z-Achse so gewählt, dass der Anpressdruck des ausgebildeten Dichtelements im Kontakt mit einem weiteren metallischen oder metallhaltigen Bauelement oder einer Membran-Elektroneneinheit (MEA) zwischen 1,0 und 150.0 MPa beträgt. Der hier genannte Anpressdruck von 1,0 bis 150,0 MPa bezieht sich also auf den Druck zwischen dem Dichtelement und den kontaktieren metallischen oder metallhaltigen Bauelementen.

Der Halbzellenverbund gemäß der vorliegenden Erfindung weist ferner bevorzugt die folgenden Dimensionen auf:
a) das Streckmetall hat eine Stärke von 0,1 bis 1,5 mm bezogen auf die z-Achse; oder alternativ
   das Lochblech hat eine Stärke von 0,05 bis 0,8 mm bezogen auf die z-Achse
b) die Kraftverteilplatte hat eine Stärke von 0,05 bis 1,5 mm bezüglich der z-Achse. Hierbei ist besonders bevorzugt, dass die Kraftverteilerplatte bei Ausführung als Streckmetall eine Stärke von 0,1 bis 1,5 mm aufweist, und dass die Kraftverteilerplatte bei Ausführung als Lochblech eine Stärke von 0,05 bis 0,8 mm aufweist;
c) das Gasdiffusionsschichtelement hat eine Stärke von 0,01 bis 0,5 mm bezüglich der z-Achse.

Die genannten Stärken können allein oder in Kombination auftreten. Es ist besonders bevorzugt, wenn alle Elemente die genannten Stärken aufweisen.

Die vorliegende Erfindung stellt auch einen Verbund bereit. Dieser Verbund, welcher insbesondere zur Elektrolyse geeignet ist, umfasst, bzw. besteht bevorzugt bestehend aus:
Eine (einer) bipolare Platte (BPP);
einen (einem) Halbzellenverbund wie hierin beschrieben,
eine (einer) Membran-Elektrodeneinheit (MEA),
wobei Dichtflächen nur
   i) zwischen der bipolaren Platte (BPP) (2) und dem Halbzellenverbund (3); sowie
   ii) zwischen dem Halbzellenverbund (3) und der Membran-Elektrodeneinheit (MEA) (4)
vorhanden sind.

Alle bevorzugten Aspekte wie in Bezug auf den Halbzellenverbund offenbart gelten auch für den Verbund.

In einer Ausführungsform des Verbundes wird eine bipolare Platte mit Kanalstruktur eingesetzt.

In einem weiteren Aspekt stellt die vorliegende Erfindung einen Verbundanordnung bereit. Die Verbundanordnung unterscheidet sich vom hier beschriebenen Halbzellenverbund dadurch, dass als Tragstruktur keine Kraftverteilplatte, sondern eine bipolare Platte mit Kanälen eingesetzt wird. Im Gegensatz zum hier beschriebenen Halbzellenverbund liegt also keine Kraftverteilplatte mit infiltriertem Dichtelement, sondern eine bipolare Platte als Trägerstruktur mit Kanälen mit infiltriertem Dichtelement im perforiertem Randbereich vor. Alle bevorzugten Aspekte wie in Bezug auf den Halbzellenverbund offenbart gelten auch für die Verbundanordnung in analoger Weise.

Es ist bevorzugt, dass
die Abfolge der Bauteile
   a) erstes Gasdiffusionsschichtelement;
   b) erste Kraftverteilerplatte ohne infiltriertem Dichtelement;
   c) bipolare Platte als Trägerstruktur mit Kanälen mit infiltriertem Dichtelement im perforiertem Randbereich
   d) zweite Kraftverteilerplatte ohne infiltriertem Dichtelement
   e) zweites Gasdiffusionsschichtelement
die z-Achse definiert, und
die bipolare Platte als Trägerstruktur mit Kanälen mit infiltriertem Dichtelement im perforiertem Randbereich so infiltriert ist, dass sich ein mindestens einseitiger, bevorzugt zweiseitiger Überstand im Bericht der Infiltration entlang der z-Achse bildet, wodurch
aa) ein erstes Dichtelement zwischen bipolarer Platte als Trägerstruktur mit Kanälen und perforiertem Randbereich und der ersten Membran-Elektrodeneinheit (MEA) entsteht; und
bb) bevorzugt ein zweites Dichtelement zwischen der bipolaren Platte als Trägerstruktur mit Kanälen und perforiertem Randbereich und der zweiten Membran-Elektrodeneinheit (MEA) entsteht.

Es ist ferner bevorzugt, dass in der Verbundanordnung gemäß der vorliegenden Erfindung,
das infiltrierte Dichtelement im perforierten Randbereich der bipolaren Platte als Trägerstruktur mit Kanälen sowie
aa) das erste Dichtelement zwischen bipolarer Platte als Trägerstruktur mit Kanälen und perforiertem Randbereich und der ersten Membran-Elektrodeneinheit (MEA); und/oder, bevorzugt und,
bb) das zweite Dichtelement zwischen der bipolaren Platte als Trägerstruktur mit Kanälen und perforiertem Randbereich und der zweiten Membran-Elektrodeneinheit (MEA) aus einem Material, besonders bevorzugt aus einem durchgehenden Material besteht.

In einem weiteren Aspekt stellt die Erfindung auch einen Stack zur Verfügung. Alle bevorzugten Aspekte wie hier in Bezug auf den Halbzellenverbund, den Verbund, und die Verbundanordnung beschrieben, gelten auch für den Stack.

### Detaillierte Beschreibung

### Bezugszeichenliste

- 1: Anodische oder kathodische Stromverteilplatte
- 2: Bipolare Platte
- 3: Halbzellenverbund
- 4: Membran-Elektrodeneinheit (MEA)
- 5: Streckmetall
- 6: Kraftverteilplatte
- 7: Gasdiffusionsschichtelement
- 8: Dichtelement (Elastomer und/oder Plastomer)
- 9: Bipolare Platte mit Kanalstruktur
- 10: Bipolare Platte als Trägerstruktur mit Kanälen und perforiertem Randbereich
- 6-1: Kraftverteilplatte mit infiltriertem Dichtelement (8-3) auch als Trägerstruktur mit infiltriertem Dichtelement (8-3) bezeichnet
- 10-1: perforierter Randbereich der bipolare Platte (10) als Trägerstruktur mit Kanälen mit infiltriertes Dichtelement (8-3)

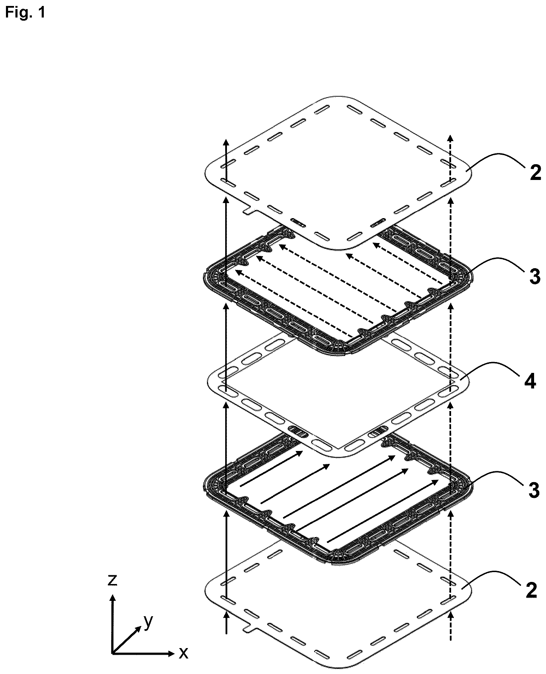

Fig. 1 zeigt eine Abfolge von Bauteilen in einem Zellstapel zur Beschreibung einer Einzelzelle . Die Einzelzelle ist aufgebaut als Abfolge bipolare Platte (2) / Halbzellenverbund (3) / Membran-Elektrodeneinheit (MEA) (4) / Halbzellenverbund (3) und bipolare Platte (2). In der gezeigten Ausführungsform sind die beiden Halbzellenverbünde um 90° in der z-Achse zueinander gedreht.

Fig. 2 ist ein Schnitt durch eine erste Ausführungsform eines erfindungsgemäßen Verbundes umfassend:
Bipolare Platte (BPP) (2);
Halbzellenverbund (3) umfassend
   a) Streckmetall (5),
   b) Kraftverteilerplatte (6-1) mit infiltriertem Dichtelement (8-3) und
   c) Gasdiffusionsschichtelement (7), wobei a), b) und c) als materialschlüssiger Verbund ausgeführt sind;
Membran-Elektrodeneinheit (MEA) (4).

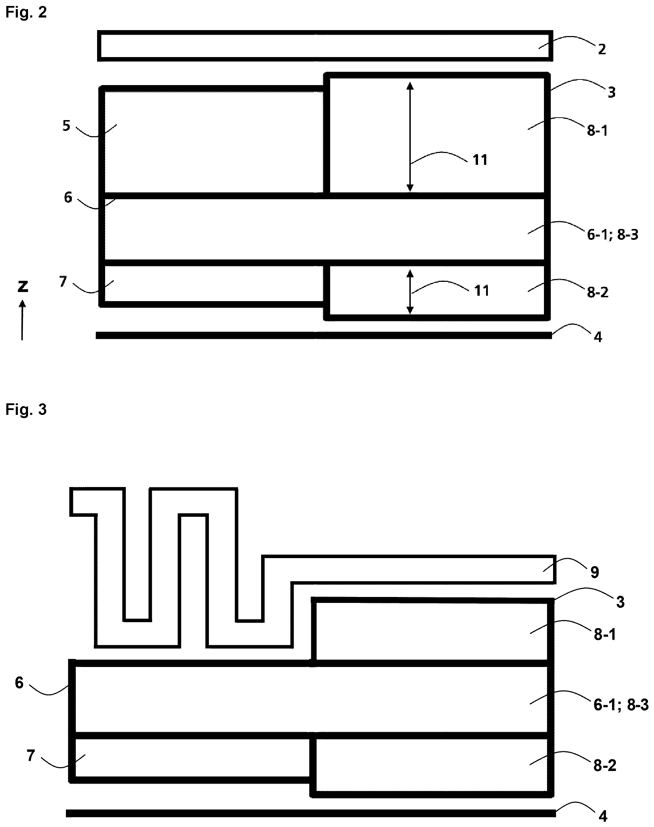

Fig. 2 zeigt ferner die Dichtelemente (8) zur Herstellung des Verbundes dieser ersten Ausführungsform. In dieser Ausführungsform kann die Kraftverteilplatte (6) auch als Substrat oder auch als Trägerstruktur bezeichnet werden.

Hierbei ist ein erstes Dichtelement (8-1) zwischen bipolarer Platte (2) und Kraftverteilerplatte (6) vorgesehen. Ein zweites Dichtelement (8-2) ist zwischen dieser Kraftverteilerplatte (6) und der Membran-Elektrodeneinheit (MEA) (4) vorgesehen. Durch Einbringen eines dritten Dichtelementes (8-3) in die Kraftverteilerplatte (6) im Bereich des ersten (8-1) und zweiten (8-2) Dichtelements entsteht eine Kraftverteilerplatte mit infiltriertem Dichtelement (6-1). In einer bevorzugten Ausführungsform ist das erste und das zweite Dichtelement (8-1; 8-2) sowie das infiltrierte Dichtelement (8-3) der Kraftverteilplatte (6-1) identisch.

In einer solchen bevorzugten Ausführungsform durchdringt das Dichtelement die offene Struktur des Streckmetalls oder Lochblechs (Kraftverteilerplatte bzw. Substrat bzw. Trägerstruktur) und bildet nach oben einen Überstand aus zur Aufnahme eines Streckmetalls und bildet nach unten einen Überstand aus zur Aufnahme eines Gasdiffusionsschichtelements. Es ist auch möglich, dass das Streckmetall oder Lochblech ohne Randbereich vom Material des Dichtelements im Randbereich durchdrungen wird. Ferner ist auch möglich, dass das Gasdiffusionsschichtelement im Randbereich vom Material des Dichtelements durchdrungen wird.

Fig. 3 zeigt eine zweite Ausführungsform eines erfindungsgemäßen Verbundes umfassend, bevorzugt bestehend aus:
eine (einer) bipolare(n) Platte (BPP) mit Kanalstruktur (9);
einen (einem) Halbzellenverbund (3) umfassend
   a) Kraftverteilerplatte (6-1) mit infiltriertem Dichtelement (8-3) und
   b) Gasdiffusionsschichtelement (7), wobei a) und b) als zumindest teilweise materialschlüssiger Verbund ausgeführt sind;
eine (einer) Membran-Elektrodeneinheit (MEA) (4).

Fig. 3 zeigt ferner die Dichtelemente zur Herstellung des Verbundes dieser zweiten Ausführungsform. Hierbei ist ein erstes Dichtelement (8-1) zwischen bipolarer Platte mit Kanalstruktur (9) und Kraftverteilerplatte (6) vorgesehen. Ein zweites Dichtelement (8-2) ist zwischen Kraftverteilerplatte (6) und der Membran-Elektrodeneinheit (MEA) (4) vorgesehen. Durch Einbringen eines dritten Dichtelementes (8-3) in die Kraftverteilerplatte (6) im Bereich des ersten (8-1) und zweiten (8-2) Dichtelements entsteht eine Kraftverteilerplatte mit infiltriertem Dichtelement (6-1). In dieser Ausführungsform kann die Kraftverteilplatte (6-1) auch als Substrat oder auch als Trägerstruktur bezeichnet werden. In einer bevorzugten Ausführungsform ist das erste und das zweite Dichtelement sowie das infiltrierte Dichtelement (8-3) der Kraftverteilplatte (6-1) identisch.

Fig. 4 zeigt eine dritte Ausführungsform eines erfindungsgemäßen Verbundes, hier Verbundanordnung genannt, umfassend, bevorzugt bestehend aus:
eine erste (einer ersten) Membran-Elektrodeneinheit (MEA) (4);
einen (einem) Halbzellenverbund (3) umfassend bevorzugt bestehend aus
   a) ein erstes (einem ersten) Gasdiffusionsschichtelement (7);
   b) eine erste (einer ersten) Kraftverteilerplatte (6) ohne infiltriertem Dichtelement;
   c) eine (einer) bipolare(n) Platte als Trägerstruktur mit Kanälen (10) mit perforiertem Randbereich (10-1) und infiltriertem Dichtelement (8-3)
   d) eine zweite (einer zweiten) Kraftverteilerplatte (6) ohne infiltriertem Dichtelement
   e) ein zweites (einem zweiten) Gasdiffusionsschichtelement (7)
wobei a) bis e) als zumindest teilweise materialschlüssiger Verbund ausgeführt sind;
eine zweite (einer zweiten) Membran-Elektrodeneinheit (MEA) (4).

Fig. 4 zeigt ferner die Dichtelemente (8) zur Herstellung des Verbundes dieser dritten Ausführungsform. Hierbei ist ein erstes Dichtelement (8-1) zwischen bipolarer Platte als Trägerstruktur mit Kanälen und perforiertem Randbereich (10) und der Membran-Elektrodeneinheit (MEA) (4) vorgesehen. Ein zweites Dichtelement (8-2) ist zwischen der bipolaren Platte als Trägerstruktur mit Kanälen und perforiertem Randbereich (10) und der Membran-Elektrodeneinheit (MEA) (4) vorgesehen. Bevorzugt sind erstes und zweites Dichtelement (8-1 und 8-2) stofflich identisch. Durch Einbringen eines dritten Dichtelementes (8-3) in den perforierten Randbereich der bipolaren Platte (10) im Bereich des ersten (8-1) und zweiten (8-2) Dichtelements entsteht eine bipolare Platte (10-1) mit infiltriertem Dichtelement (8-3). In dieser Ausführungsform kann die bipolare Platte (10-1) auch als Substrat oder auch als Trägerstruktur bezeichnet werden. In einer bevorzugten Ausführungsform ist das erste und das zweite Dichtelement sowie das infiltrierte Dichtelement im perforierten Randbereich der bipolaren Platte identisch. Vorteilhafterweise wird die offene Struktur der perforierten bipolaren Platte (10) im Randbereich durchdrungen und nach oben ein Überstand ausgebildet zur Aufnahme einer Kraftverteilerplatte (6) und eines Gasdiffusionsschichtelementes (7). Außerdem wird nach unten bevorzugt ein Überstand zur Aufnahme einer Kraftverteilerplatte (6) und eines Gasdiffusionsschichtelementes (7) ausgebildet.

Fig. 5 zeigt einVerbundsystem (nicht beansprucht), umfassend, bevorzugt bestehend aus:
eine erste (einer ersten) Membran-Elektrodeneinheit (MEA) (4);
einen (einem) Halbzellenverbund (3) umfassend bevorzugt bestehend aus
   a) ein erstes (einem ersten) Gasdiffusionsschichtelement (7);
   b) eine (einer) bipolare Platte als Trägerstruktur mit Kanälen (10) mit perforiertem Randbereich (10-1) und infiltriertem Dichtelement (8-3)
   c) ein zweites (einem zweiten) Gasdiffusionsschichtelement (7)
wobei a) bis c) als materialschlüssiger Verbund ausgeführt sind;
eine zweite (einer zweiten) Membran-Elektrodeneinheit (MEA) (4).

Fig. 5 zeigt ferner die Dichtelemente (8) zur Herstellung des Verbundes. Hierbei ist ein erstes Dichtelement (8-1) zwischen bipolarer Platte als Trägerstruktur mit Kanälen mit infiltriertem Dichtelement im perforiertem Randbereich (10-1; 8-3) und der Membran-Elektrodeneinheit (MEA) (4) vorgesehen. Ein zweites Dichtelement (8-2) ist zwischen der bipolaren Platte als Trägerstruktur mit Kanälen mit infiltriertem Dichtelement im perforiertem Randbereich (10-1; 8-3) und der Membran-Elektrodeneinheit (MEA) (4) vorgesehen. Bevorzugt sind erstes und zweites Dichtelement (8-1; 8-2) stofflich identisch. In einer bevorzugten Ausführungsform ist das erste und das zweite Dichtelement sowie das infiltrierte Dichtelement (8-3) im perforierten Randbereich der bipolaren Platte (10) identisch. Vorteilhafterweise wird die offene Struktur der perforierten bipolaren Platte (10) im Randbereich durchdrungen und nach oben ein Überstand ausgebildet zur Aufnahme eines Gasdiffusionsschichtelementes(7). Außerdem wird nach unten bevorzugt ein Überstand zur Aufnahme eines Gasdiffusionsschichtelementes (7) ausgebildet.

## Patentansprüche

1. Halbzellenverbund (HZV) (3), umfassend:
a) Streckmetall (5) oder Lochblech ohne Randbereich,
b) Kraftverteilerplatte (6-1) mit infiltriertem Dichtelement (8-3) und
c) Gasdiffusionsschichtelement (7), wobei a), b) und c) als materialschlüssiger Verbund ausgeführt sind,
wobei der Halbzellenverbund (HZV) bevorzugt aus den Elementen a), b) und c) besteht.

2. Halbzellenverbund (HZV) (3) gemäß Anspruch 1, wobei Elastomere und/oder Plastomere
i) in die Kraftverteilerplatte (6-1) und/oder
ii) das Gasdiffusionsschichtelement (7) und/oder
iii) das Streckmetall (5) oder das Lochblech ohne Randbereich eingebracht sind.

3. Halbzellenverbund (HZV) (3) gemäß Anspruch 1 oder 2, wobei die Abfolge der Bauteile
a) Streckmetall (5) oder Lochblech ohne Randbereich,
b) Kraftverteilerplatte (6-1) mit infiltriertem Dichtelement (8-3) und
c) Gasdiffusionsschichtelement (7),
die z-Achse definiert;
und wobei
das infiltrierte Dichtelement (8-3) einen mindestens einseitigen Überstand (11) im Bereich der Infiltration entlang der z-Achse
i) auf der Seite des Streckmetalls (5) ;
oder
ii) auf der Seite des Gasdiffusionsschichtelementes (7) bildet.

4. Halbzellenverbund (HZV) (3) gemäß Anspruch 3, wobei der mindestens einseitige Überstand (11), bevorzugt zweiseitige Überstand (11) in Richtung der z-Achse mindestens ein Dichtelement (8-1), bevorzugt zwei Dichtelemente (8-2) bildet.

5. Halbzellenverbund (HZV) (3) gemäß Anspruch 3 oder 4, wobei der mindestens einseitige Überstand in Richtung der z-Achse so gewählt ist, dass ein Anpressdruck zwischen 0,1 und 8,0 MPa zwischen
einem weiteren metallischen oder metallhaltigen Bauelement im Kontakt mit
i) dem Streckmetall (5);
oder mit
ii) dem Gasdiffusionsschichtelement (7),
bezogen auf die Kontaktflächen des Streckmetalls (5) oder des Gasdiffusionsschichtelement (7) mit dem weiteren oder den weiteren metallischen oder metallhaltigen Bauelementen außerhalb des Dichtelements ermöglicht wird.

6. Halbzellenverbund (HZV) (3) gemäß einem der Ansprüche 3 bis 5, wobei der mindestens einseitige Überstand in Richtung der z-Achse so gewählt ist, dass der Anpressdruck des ausgebildeten Dichtelements im Kontakt mit einem weiteren metallischen oder metallhaltigen Bauelement oder einer Membran-Elektrodeneinheit (MEA) zwischen 1,0 und 150,0 MPa beträgt.

7. Halbzellenverbund (HZV) (3) gemäß einem der voranstehenden Ansprüche, wobei
a) das Streckmetall (5) eine Stärke von 0,1 bis 1,5 mm
oder
das Lochblech ohne Randbereich eine Stärke von 0,05 bis 0,8 mm bezüglich der z-Achse aufweist,
und/oder
b) die Kraftverteilerplatte (6-1) eine Stärke von 0,05 bis 1,5 mm bezüglich der z-Achse aufweist, wobei bevorzugt,
ba) die Kraftverteilerplatte (6-1) bei Ausführung als Streckmetall eine Stärke von 0,1 bis 1,5 mm aufweist,
und wobei bevorzugt
bb) die Kraftverteilerplatte (6-1) bei Ausführung als Lochblech eine Stärke von 0,05 bis 0,8 mm bezüglich der z-Achse aufweist
und/oder
c) das Gasdiffusionsschichtelement (7) eine Stärke von 0,01 bis 0,5 mm bezüglich der z-Achse aufweist.

8. Halbzellenverbund (HZV) (3) gemäß einem der voranstehenden Ansprüche, wobei Kraftverteilerplatte (6-1) mit infiltriertem Dichtelement (8-3) in mindestens einem ersten Bereich vollständig infiltriert ist und in einem weiteren Bereich nicht infiltriert ist.

9. Halbzellenverbund (HZV) (3) gemäß einem der voranstehenden Ansprüche, wobei das Gasdiffusionsschichtelement (7)
- eine Porous Transport Layer (PTL) oder
- eine Porous Transport Layer (PTL) mit einer Microporous Layer (MPL) oder
- eine Microporous Layer (MPL)
ist.

10. Halbzellenverbund (HZV) (3) gemäß einem der voranstehenden Ansprüche, wobei der materialschlüssige Verbund durch Elektroschweißen oder Laserschweißen oder Diffusionsschweißen oder Sintern bewirkt wurde.

11. Verbund, insbesondere geeignet zur Elektrolyse umfassend:
eine bipolare Platte (BPP) (2);
einen Halbzellenverbund (HZV) (3) gemäß einem der Ansprüche 1 bis 10,
eine Membran-Elektrodeneinheit (MEA) (4),
wobei Dichtflächen nur
i) zwischen der bipolaren Platte (BPP) (2) und dem Halbzellenverbund (3); sowie
ii) zwischen dem Halbzellenverbund (3) und der Membran-Elektrodeneinheit (MEA) (4)
vorhanden sind, wobei
bevorzugt der Verbund aus den Elementen bipolare Platte (BPP) (2),
Halbzellenverbund (HZV) (3) gemäß einem der Ansprüche 1 bis 10 und Membran-Elektrodeneinheit (MEA) (4) besteht.

12. Verbund gemäß Anspruch 11, wobei kein weiteres Dichtelement vorhanden ist.

13. Verbund gemäß einem Anspruch 11 oder 12, wobei die bipolare Platte eine Kanalstruktur aufweist.

14. Verbundanordnung umfassend:
eine erste Membran-Elektrodeneinheit (MEA) (4);
einen Halbzellenverbund (3) umfassend,
a) ein erstes Gasdiffusionsschichtelement (7);
b) eine erste Kraftverteilerplatte (6) ohne infiltriertem Dichtelement;
c) eine bipolare Platte als Trägerstruktur mit Kanälen (10) mit infiltriertem Dichtelement (8-3) im perforiertem Randbereich (10-1)
d) eine zweite Kraftverteilerplatte (6) ohne infiltriertem Dichtelement
e) ein zweites Gasdiffusionsschichtelement (7)
wobei a) bis e) als zumindest teilweise materialschlüssiger, bevorzugt materialschlüssiger Verbund ausgeführt sind; und
eine zweite Membran-Elektrodeneinheit (MEA) (4),
wobei die Verbundanordnung bevorzugt aus den Elementen erste Membran-Elektrodeneinheit (MEA) (4), dem Halbzellenverbund (3), und zweiter Membran-Elektrodeneinheit (MEA) (4) besteht.

15. Verbundanordnung gemäß Anspruch 14, wobei
die Abfolge der Bauteile
a) erstes Gasdiffusionsschichtelement (7);
b) erste Kraftverteilerplatte (6) ohne infiltriertem Dichtelement;
c) bipolare Platte als Trägerstruktur mit Kanälen (10) mit infiltriertem Dichtelement (8-3) im perforiertem Randbereich (10-1)
d) zweite Kraftverteilerplatte (6) ohne infiltriertem Dichtelement
e) zweites Gasdiffusionsschichtelement (7)
die z-Achse definiert, und wobei
die bipolare Platte als Trägerstruktur mit Kanälen (10) mit infiltriertem Dichtelement (8-3) im perforiertem Randbereich (10-1) so infiltriert ist, dass sich ein mindestens einseitiger, bevorzugt zweiseitiger Überstand im Bericht der Infiltration entlang der z-Achse bildet, wodurch
aa) ein erstes Dichtelement (8-1) zwischen bipolarer Platte als Trägerstruktur mit Kanälen und perforiertem Randbereich (10-1) und der ersten Membran-Elektrodeneinheit (MEA) (4) entsteht; und
bb) bevorzugt ein zweites Dichtelement (8-2) zwischen der bipolaren Platte als Trägerstruktur mit Kanälen und perforiertem Randbereich (10-1) und der zweiten Membran-Elektrodeneinheit (MEA) (4) entsteht.

16. Verbundanordnung gemäß einem der Anspruch 14 oder 15, wobei das infiltrierte Dichtelement (8-3) im perforierten Randbereich (10-1) der bipolaren Platte als Trägerstruktur mit Kanälen (10) sowie
aa) das erste Dichtelement (8-1) zwischen bipolarer Platte als Trägerstruktur mit Kanälen (10) und perforiertem Randbereich (10-1) und der ersten Membran-Elektrodeneinheit (MEA) (4);
und/oder,
bevorzugt und,
bb) das zweite Dichtelement (8-2) zwischen der bipolaren Platte als Trägerstruktur mit Kanälen (10) und perforiertem Randbereich (10-1) und der zweiten Membran-Elektrodeneinheit (MEA) (4) aus einem Material, besonders bevorzugt aus einem durchgehenden Material besteht.

17. Stack enthaltend
- ein oder mehrere Halbzellenverbunde (HZV) gemäß einem der Ansprüche 1 bis 10, und/oder
- einen oder mehrere Verbünde gemäß einem der Ansprüchen 11 bis 13, und/oder
- ein oder mehrere Verbundanordnungen gemäß einem der Ansprüche 14 bis 16.

## Claims

1. Half-cell assembly (HCA) (3), comprising:
a) expanded metal (5) or perforated sheet metal without a peripheral area,
b) a force distribution plate (6-1) with an infiltrated sealing element (8-3), and
c) a gas diffusion layer element (7), wherein a), b) and c) are designed as a material-locking assembly,
wherein the half-cell assembly (HCA) preferably consists of elements a), b) and c).

2. Half-cell assembly (HCA) (3) according to claim 1, wherein elastomers and/or plastomers are introduced into
i) the force distribution plate (6-1) and/or
ii) the gas diffusion layer element (7) and/or
iii) the expanded metal (5) or the perforated sheet metal without peripheral area.

3. Half-cell assembly (HCA) (3) according to claim 1 or 2, wherein the sequence of components
a) expanded metal (5) or perforated sheet metal without peripheral area,
b) force distribution plate (6-1) with infiltrated sealing element (8-3) and
c) gas diffusion layer element (7),
defining the z-axis;
and wherein
the infiltrated sealing element (8-3) has at least one-sided overhang (11) in the area of infiltration along the z-axis
i) on the side of the expanded metal (5) ;
or
ii) on the side of the gas diffusion layer element (7).

4. Half-cell assembly (HCA) (3) according to claim 3, wherein the at least one-sided overhang (11), preferably two-sided overhang (11) in the direction of the z-axis forms at least one sealing element (8-1), preferably two sealing elements (8-2).

5. Half-cell assembly (HCA) (3) according to claim 3 or 4, wherein the at least one-sided overhang in the direction of the z-axis is selected such that a contact pressure between 0.1 and 8.0 MPa is made possible between
a further metallic or metal-containing component in contact with
i) the expanded metal (5);
or with
ii) the gas diffusion layer element (7),
in relation to the contact surfaces of the expanded metal (5) or the gas diffusion layer element (7) with the further metallic or metal-containing component(s) outside the sealing element.

6. Half-cell assembly (HCA) (3) according to anyone of claims 3 to 5, wherein
the at least one-sided overhang in the direction of the z-axis is selected such that the contact pressure of the formed sealing element in contact with a further metallic or metal-containing component or a membrane electrode assembly (MEA) is between 1.0 and 150.0 MPa.

7. Half-cell assembly (HCA) (3) according to anyone of the preceding claims, wherein
a) the expanded metal (5) has a thickness of 0.1 to 1.5 mm
or
the perforated sheet metal without the peripheral area has a thickness of 0.05 to 0.8 mm with respect to the z-axis,
and/or
b) the force distribution plate (6-1) has a thickness of 0.05 to 1.5 mm with respect to the z-axis, wherein it is preferred that
ba) the force distribution plate (6-1), when designed as expanded metal, has a thickness of 0.1 to 1.5 mm,
and preferably
bb) the force distribution plate (6-1), when designed as perforated sheet metal, has a thickness of 0.05 to 0.8 mm with respect to the z-axis
and/or
c) the gas diffusion layer element (7) has a thickness of 0.01 to 0.5 mm with respect to the z-axis.

8. Half-cell assembly (HCA) (3) according to anyone of the preceding claims, wherein the force distribution plate (6-1) with infiltrated sealing element (8-3) is completely infiltrated in at least one first area and is not infiltrated in a further area.

9. Half-cell assembly (HCA) (3) according to anyone of the preceding claims, wherein the gas diffusion layer element (7) is:
- a porous transport layer (PTL) or
- a porous transport layer (PTL) with a microporous layer (MPL) or
- a microporous Layer (MPL).

10. Half-cell assembly (HCA) (3) according to anyone of the preceding claims, wherein the material-locking assembly was produced by electro-welding or laser welding or diffusion welding or sintering.

11. Assembly, particularly suitable for electrolysis, comprising:
a bipolar plate (BPP) (2);
a half-cell assembly (HCA) (3) according to anyone of claims 1 to 10,
a membrane electrode assembly (MEA) (4),
wherein sealing surfaces are only present
i) between the bipolar plate (BPP) (2) and the half-cell assembly (3); and
ii) between the half-cell assembly (3) and the membrane electrode assembly (MEA) (4),
wherein
the assembly preferably consists of the elements bipolar plate (BPP) (2), half-cell assembly (HCA) (3) according to one of claims 1 to 10, and membrane electrode assembly (MEA) (4).

12. Assembly according to claim 11, wherein no further sealing element is present.

13. Assembly according to claim 11 or 12, wherein the bipolar plate has a channel structure.

14. An assembly arrangement comprising:
a first membrane electrode assembly (MEA) (4);
a half-cell assembly (3) comprising
a) a first gas diffusion layer element (7);
b) a first force distribution plate (6) without an infiltrated sealing element;
c) a bipolar plate as a support structure with channels (10) with an infiltrated sealing element (8-3) in the perforated peripheral area (10-1)
d) a second force distribution plate (6) without an infiltrated sealing element
e) a second gas diffusion layer element (7)
wherein a) to e) are designed as at least partially material-locking, preferably material-locking assemblys; and
a second membrane electrode assembly (MEA) (4),
wherein the assembly arrangement preferably consists of the elements first membrane electrode assembly (MEA) (4), the half-cell assembly (3), and second membrane electrode assembly (MEA) (4).

15. Assembly arrangement according to claim 14, wherein
the sequence of components
a) first gas diffusion layer element (7);
b) first force distribution plate (6) without infiltrated sealing element;
c) bipolar plate as a support structure with channels (10) with infiltrated sealing element (8-3) in the perforated peripheral area (10-1)
d) second force distribution plate (6) without infiltrated sealing element
e) second gas diffusion layer element (7)
defines the z-axis, and wherein
the bipolar plate as a support structure with channels (10) with infiltrated sealing element (8-3) in the perforated peripheral area (10-1) is infiltrated in such a way that at least a one-sided, preferably a two-sided overhang forms in the direction of the infiltration along the z-axis, whereby
aa) a first sealing element (8-1) is formed between the bipolar plate as a support structure with channels and perforated peripheral region (10-1) and the first membrane electrode assembly (MEA) (4); and
bb) preferably a second sealing element (8-2) is formed between the bipolar plate as a support structure with channels and perforated peripheral area (10-1) and the second membrane electrode assembly (MEA) (4).

16. Assembly arrangement according to one of claims 14 or 15, wherein the infiltrated sealing element (8-3) is formed in the perforated peripheral area (10-1) of the bipolar plate as a support structure with channels (10) and
aa) the first sealing element (8-1) between a bipolar plate as a support structure with channels (10) and a perforated peripheral area (10-1) and the first membrane electrode assembly (MEA) (4);
and/or,
preferably and,
bb) the second sealing element (8-2) between the bipolar plate as a support structure with channels (10) and perforated peripheral area (10-1) and the second membrane electrode assembly (MEA) (4)
consists of a material, particularly preferably of a continuous material.

17. Stack containing
- one or more half-cell assemblies (HCA) according to one of claims 1 to 10, and/or
- one or more assemblies according to one of claims 11 to 13, and/or
- one or more assembly arrangements according to one of claims 14 to 16.

## Revendications

1. Composite à demi-cellules (HZV) (3), comprenant :
a) métal déployé (5) ou une tôle perforée sans zone de bordure,
b) plaque de répartition de force (6-1) avec élément d'étanchéité infiltré (8-3) et
c) élément à couche de diffusion de gaz (7), a), b) et c) étant réalisés sous la forme d'un assemblage par liaison de matières,
le composite à demi-cellules (HZV) se composant de préférence des éléments a), b) et c).

2. Composite à demi-cellules (HZV) (3) selon la revendication 1, des élastomères et/ou des plastomères étant incorporés
i) dans la plaque de répartition de force (6-1) et/ou
ii) dans l'élément à couche de diffusion de gaz (7) et/ou
iii) dans le métal déployé (5) ou la tôle perforée sans zone de bordure.

3. Composite à demi-cellules (HZV) (3) selon la revendication 1 ou 2, la séquence des composants
a) métal déployé (5) ou une tôle perforée sans zone de bordure,
b) plaque de répartition de force (6-1) avec élément d'étanchéité infiltré (8-3) et
c) élément à couche de diffusion de gaz (7), définissant l'axe z ;
et
l'élément d'étanchéité infiltré (8-3) formant une projection (11) au moins unilatérale dans la zone de l'infiltration le long de l'axe z
i) sur le côté du métal déployé (5) ;
ou
ii) sur le côté de l'élément à couche de diffusion de gaz (7).

4. Composite à demi-cellules (HZV) (3) selon la revendication 3, la projection (11) d'au moins unilatérale, de préférence la projection (11) bilatérale, formant dans la direction de l'axe z au moins un élément d'étanchéité (8-1), de préférence deux éléments d'étanchéité (8-2).

5. Composite à demi-cellules (HZV) (3) selon la revendication 3 ou 4, la projection au moins unilatérale dans la direction de l'axe z étant choisie de telle sorte qu'une pression de contact comprise entre 0,1 et 8,0 MPa entre
un composant supplémentaire métallique ou contenant du métal en contact avec
i) le métal déployé (5) ;
ou avec
ii) l'élément à couche de diffusion de gaz (7),
par rapport aux surfaces de contact du métal déployé (5) ou de l'élément à couche de diffusion de gaz (7) avec le ou les composants supplémentaires métalliques ou contenant du métal à l'extérieur de l'élément d'étanchéité soit rendue possible.

6. Composite à demi-cellules (HZV) (3) selon l'une des revendications 3 à 5,
la projection au moins unilatérale dans la direction de l'axe z étant choisie de telle sorte que la pression de contact de l'élément d'étanchéité formé en contact avec un composant supplémentaire métallique ou contenant du métal ou une unité membrane-électrode (MEA) est comprise entre 1,0 et 150,0 MPa.

7. Composite à demi-cellules (HZV) (3) selon l'une des revendications précédentes,
a) le métal déployé (5) présentant une épaisseur de 0,1 à 1,5 mm
ou
la tôle perforée sans zone de bordure une épaisseur de 0,05 à 0,8 mm par rapport à l'axe z,
et/ou
b) la plaque de répartition de force (6-1) présentant une épaisseur de 0,05 à 1,5 mm par rapport à l'axe z,
ba) la plaque de répartition de force (6-1), dans le cas d'une réalisation en métal déployé, présentant de préférence une épaisseur de 0,1 à 1,5 mm,
et
bb) la plaque de répartition de force (6-1), dans le cas d'une réalisation sous forme de tôle perforée, présentant de préférence une épaisseur de 0,05 à 0,8 mm par rapport à l'axe z
et/ou
c) l'élément de couche de diffusion gazeuse (7) présentant une épaisseur de 0,01 à 0,5 mm par rapport à l'axe z.

8. Composite à demi-cellules (HZV) (3) selon l'une des revendications précédentes, la plaque de répartition de force (6-1) avec l'élément d'étanchéité infiltré (8-3) étant complètement infiltrée dans au moins une première zone et n'étant pas infiltrée dans une zone supplémentaire.

9. Composite à demi-cellules (HZV) (3) selon l'une des revendications précédentes, l'élément à couche de diffusion de gaz (7) étant
- une couche de transport poreuse (PTL) ou
- une couche de transport poreuse (PTL) avec une couche microporeuse (MPL) ou
- une couche microporeuse (MPL).

10. Composite à demi-cellules (HZV) (3) selon l'une des revendications précédentes, l'assemblage par liaison de matières ayant été réalisé par soudage électrique ou soudage au laser ou soudage par diffusion ou frittage.

11. Composite, particulièrement adapté à l'électrolyse, comprenant :
une plaque bipolaire (BPP) (2) ;
un composite à demi-cellules (HZV) (3) selon l'une des revendications 1 à 10,
une unité d'électrode à membrane (MEA) (4),
des surfaces d'étanchéité étant uniquement présentes
i) entre la plaque bipolaire (BPP) (2) et le composite à demi-cellules (3) ; ainsi que
ii) entre le composite à demi-cellules (3) et l'unité membrane-électrode (MEA) (4),
le composite étant constitué de préférence des éléments plaque bipolaire (BPP) (2), composite à demi-cellules (HZV) (3) selon l'une des revendications 1 à 10 et unité membrane-électrode (MEA) (4).

12. Composite selon la revendication 11, aucun élément d'étanchéité supplémentaire n'étant présent.

13. Composite selon l'une des revendications 11 et 12, la plaque bipolaire présentant une structure en canaux.

14. Arrangement composite comprenant :
une première unité membrane-électrode (MEA) (4) ;
un composite à demi-cellules (3) comprenant,
a) un premier élément de couche de diffusion de gaz (7) ;
b) une première plaque de répartition de force (6) sans élément d'étanchéité infiltré ;
c) une plaque bipolaire en tant que structure porteuse avec des canaux (10) pourvue d'un élément d'étanchéité infiltré (8-3) dans la zone de bordure perforée (10-1)
d) une deuxième plaque de répartition de force (6) sans élément d'étanchéité infiltré
e) un deuxième élément de couche de diffusion de gaz (7)
a) à e) étant réalisés sous la forme d'un assemblage au moins partiellement par fusion de matières, de préférence par fusion de matières ; et
une seconde deuxième membrane-électrode (MEA) (4),
l'arrangement composite étant constitué de préférence des éléments première unité membrane-électrode (MEA) (4),
composite à demi-cellules (3) et deuxième unité membrane-électrode (MEA) (4).

15. Arrangement composite selon la revendication 14,
la séquence des composants
a) premier élément de couche de diffusion de gaz (7) ;
b) première plaque de répartition de force (6) sans élément d'étanchéité infiltré ;
c) plaque bipolaire en tant que structure porteuse avec des canaux (10) pourvue d'un élément d'étanchéité infiltré (8-3) dans la zone de bordure perforée (10-1)
d) deuxième plaque de répartition de force (6) sans élément d'étanchéité infiltré
e) deuxième élément de couche de diffusion de gaz (7) définissant l'axe z, et
la plaque bipolaire en tant que structure porteuse avec des canaux (10) pourvue d'un élément d'étanchéité infiltré (8-3) dans la zone de bordure perforée (10-1) étant infiltrée de telle sorte qu'une projection au moins unilatérale, de préférence bilatérale, se forme le long de l'axe z dans la zone de l'infiltration, moyennant quoi aa) un premier élément d'étanchéité (8-1) est formé entre la plaque bipolaire en tant que structure porteuse avec des canaux et une zone de bordure perforée (10-1) et la première unité membrane-électrode (MEA) (4) ; et
bb) de préférence, un deuxième élément d'étanchéité (8-2) est formé entre la plaque bipolaire en tant que structure porteuse avec les canaux et la zone de bordure perforée (10-1) et la deuxième unité membrane-électrode (MEA) (4).

16. Arrangement composite selon l'une des revendications 14 ou 15, l'élément d'étanchéité infiltré (8-3) dans la zone de bordure perforée (10-1) de la plaque bipolaire en tant que structure de support avec des canaux (10) ainsi que
aa) le premier élément d'étanchéité (8-1) entre la plaque bipolaire en tant que structure porteuse avec des canaux (10) et la zone de bordure perforée (10-1) et la première unité membrane-électrode (MEA) (4) ;
et/ou,
de préférence et,
bb) le deuxième élément d'étanchéité (8-2) entre la plaque bipolaire en tant que structure porteuse avec des canaux (10) et la zone de bordure perforée (10-1) et la deuxième unité membrane-électrode (MEA) (4) étant constitué d'un matériau, de préférence d'un matériau continu.

17. Empilement comprenant
- un ou plusieurs composites à demi-cellules (HZV) selon l'une des revendications 1 à 10, et/ou
- un ou plusieurs composites selon l'une des revendications 11 à 13, et/ou
- un ou plusieurs arrangements composites selon l'une des revendications 14 à 16.
